# EUROPÄISCHE PATENTSCHRIFT

(11) **EP 1 942 322 B1**
(45) Veröffentlichungstag und Bekanntmachung des Hinweises auf die Patenterteilung: **05.12.2012**
(21) Anmeldenummer: 08004874.7
(22) Anmeldetag: 21.01.2006
(51) Int. Cl.: G02B 3/00, G02B 21/36, G01J 3/36, G02B 27/09, G01J 3/28

(54) **Detektor mit Mikrolinsen-Anordnung**
Detector with microlens array
Détecteur avec réseau de microlentilles

(30) Priorität: 31.01.2005 DE 202005019248 U; 13.12.2005 DE 102005059948
(43) Veröffentlichungstag der Anmeldung: 09.07.2008
(62) Teilanmeldung aus: 06001263.0
(73) Patentinhaber: Leica Microsystems CMS GmbH, 35578 Wetzlar (DE)
(72) Erfinder: Seyfried, Volker, Dr., 69226 Nussloch (DE); Schreiber, Frank, 69221 Dossenheim (DE)
(74) Vertreter: Ullrich & Naumann

(56) Entgegenhaltungen:
- WO-A-02/14811
- US-A- 4 230 942
- US-A- 5 677 200
- US-A1- 2001 006 237
- US-A1- 2001 028 223
- US-A1- 2005 012 927
- US-B1- 6 400 513
- PATENT ABSTRACTS OF JAPAN Bd. 2000, Nr. 14, 5. März 2001 (2001-03-05) & JP 2000 304614 A (YOKOGAWA ELECTRIC CORP), 2. November 2000 (2000-11-02)

## Beschreibung

Die vorliegende Erfindung betrifft einen Detektor gemäß Oberbegriff des Anspruchs 1.

Detektoren der eingangs genannten Art sind aus der Praxis bekannt und werden bspw. in einem konfokalen Mikroskop zur spektralen Detektion eingesetzt. Dabei wird nach dem Detektionspinhole des konfokalen Mikroskops das Licht durch eine Linse kollimiert, das kollimierte Licht in einem dispersiven Element wie bspw. in einem Gitter, Prisma oder Hologramm spektral aufgespalten und das spektral aufgespaltene Licht mit einer Linse auf die photosensitive Anordnung, beispielsweise eine CCD-Anordnung, fokussiert.

Bei den bekannten Systemen ist jedoch problematisch, dass erreichbare Spotdurchmesser typischerweise in der Größenordnung von 100 µm bis 600 µm - abhängig von der Größe des konfokalen Pinholes - sowohl in der Richtung der spektralen Aufspaltung als auch in der dazu senkrechten Richtung liegen. Dies übersteigt die Größe von einzelnen Pixeln in gängigen photosensitiven Anordnungen um ein Vielfaches. Grundsätzlich kann man diesem Nachteil dadurch Rechnung tragen, dass man entweder größere Pixel verwendet oder aber mehrere Pixel zum Auslesen eines einzelnen Spots benutzt. Beides erhöht jedoch die benötigte Auslesezeit pro Spot, d. h. pro Detektionswellenlänge signifikant, so dass die Detektionsgeschwindigkeit für die meisten Aufgabenstellungen zu gering ist.

Aus der US 2005/012927 A1 ist ein Detektor mit einer photosensitiven Anordnung 6 mit mindestens einer photosensitiven Fläche und einem Mittel 7, 8 zur Fokussierung eines spektral aufgespaltenen Lichts auf die photosensitive Anordnung bekannt. Darüber hinaus weist das Mittel eine Mikrolinsen-Anordnung mit mehreren Mikrolinsen auf und ist die Linsengröße der einzelnen Mikrolinsen der Mikrolinsen-Anordnung in Richtung der spektralen Detektion an das jeweils vorliegende spektrale Auflösungsvermögen bei der entsprechenden Wellenlänge angepasst.

Auch das Dokument WO 02/14811 A zeigt einen Detektor mit den obigen Merkmalen. Bei beiden bekannten Detektoren werden einheitliche Mikrolinsen eingesetzt.

Der vorliegenden Erfindung liegt die Aufgabe zugrunde, einen Detektor sowie ein Spektrometer und ein Mikroskop der eingangs genannten Art anzugeben, wonach eine besonders hohe Auflösung und eine möglichst gute Anpassung an Situationen mit nichtlinearer Dispersion mit konstruktiv einfachen Mitteln erreicht sind.

Erfindungsgemäß wird die voranstehend genannte Aufgabe durch einen Detektor mit den Merkmalen des Patentanspruchs 1 gelöst.

Die photosensitive Anordnung ist eine CCD- oder APD-Anordnung - ("Avalanche Photo Diode"). Bei CCD-Anordnungen handelt es sich heutzutage um eine Massenware, die beispielsweise in Digitalkameras in großem Umfang eingesetzt wird. Der Einsatz von APD-Anordnungen oder Lawinenphotodiode-Anordnungen erfolgt heutzutage in weit geringerem Umfang lediglich in Forschungslabors. Bei einer CCD-Anordnung liegt meist ein Füllfaktor von 100% vor. D.h. zwischen den photosensitiven Flächen liegen keine Gaps oder Lücken vor. Bei einer APD-Anordnung liegen derartige Gaps zwischen den photosensitiven Flächen vor, wobei diese Gaps ca. 150µm oder mehr betragen können.

Bei einer CCD-Anordnung werden erzeugte Ladungen von einem Pixel zum nächsten Pixel wie bei einer Eimerkette transportiert. Das Auslesen der Ladung und die Verstärkung des Signals erfolgt hierbei sequentiell. Bei einer APD-Anordnung werden die induzierten Ladungen hingegen an dem Pixel verstärkt und ausgelesen, an dem sie erzeugt werden.

Bei einer CCD-Anordnung können während eines Lesezyklus mehrere Photonen pro Pixel aufsummiert werden. Die maximale Photonenzahl ist dabei von der Pixelfläche abhängig. Bei einer APD-Anordnung erfolgt eine Einzelphotonenzählung pro Pixel. Die maximale Photonenzählrate hängt hier von der Totzeit der APD ab und liegt in der Größenordnung von 5 Millionen Counts pro Sekunde.

Pixelarrays von 1.000 x 1.000 und größer sind bei CCD-Anordnungen gängig. Die Pixelgrößen liegen dabei zwischen 5µm und 20µm. Bei APD-Anordnungen sind derzeit Pixelarrays von maximal 64 x 64 verfügbar. Die gängigen Pixelgrößen liegen dabei zwischen 20µm und 150µm.

Beim Betrieb von CCD-Anordnungen ist eine starke Kühlung zur Reduzierung des Dunkelrauschens erforderlich. Bei APD-Anordnungen ist eine Kühlung oder Peltierkühlung meist nicht notwendig.

Zur Gewährleistung einer besonders hohen Detektionsgeschwindigkeit und einer besonders sicheren Detektion spektral aufgespaltenen Lichts könnte die Mikrolinsen-Anordnung zur Fokussierung in Richtung der spektralen Aufspaltung und vorzugsweise zusätzlich in hierzu senkrechter Richtung ausgebildet sein. Hierdurch ist ein besonders großer Raum- oder Flächenbereich durch den Detektor abgedeckt.

Im Konkreten könnte die Mikrolinsen-Anordnung ein zweidimensionales Mikrolinsen-Array sein. Hierdurch ist eine sichere Abdeckung des gewünschten Raum- oder Flächenbereichs gewährleistet.

Als Mikrolinsen kommen bspw. Gradienten-Index-Linsen (GRIN) in Frage. Folglich könnten die Mikrolinsen mindestens eine Gradienten-Index-Linse aufweisen.

Als besonders bevorzugte Linsen kommen sphärische Linsen in Frage. Folglich könnten die Mikrolinsen mindestens eine sphärische Linse aufweisen. Bei einer besonders bevorzugten Ausgestaltung könnten die Mikrolinsen ausschließlich sphärische Linsen sein. Dabei könnte oder könnten die Mikrolinse oder die Mikrolinsen eine sphärische Öffnung aufweisen.

Weiterhin im Hinblick auf eine besonders hohe Detektionsgeschwindigkeit und eine besonders sichere Detektion spektral aufgespaltenen Lichts könnten die Mikrolinsen eine Kombination aus einem Mikrozylinderlinsen-Array mit vorzugsweise Fokussierung in Richtung der spektralen Aufspaltung und mindestens einer Zylinderlinse mit Fokussierung in der dazu senkrechten Richtung aufweisen. Grundsätzlich könnte die mindestens eine Zylinderlinse eine einzelne Zylinderlinse, eine Mikrozylinderlinse, eine Stablinse oder ein Array aus derartigen Linsen sein. Bei der Wahl der mindestens einen Zylinderlinse ist auf den jeweiligen Anwendungsfall abzustellen.

Grundsätzlich ist darauf zu achten, dass der Fokus in beiden Raumrichtungen sich jeweils auf der photosensitiven Anordnung befindet. Insbesondere zu diesem Zweck könnten die Mikrolinsen für die Fokussierung in die beiden Richtungen unterschiedliche Brennweiten aufweisen. Insbesondere in diesem Fall könnten die Mikrolinsen für die beiden Richtungen in konstruktiv besonders einfacher Weise auf dem selben Substrat angeordnet sein. Hierdurch ist eine besonders einfach handhabbare Mikrolinsen-Anordnung realisiert. Dabei könnten die Mikrolinsen für die beiden Richtungen auf unterschiedlichen Seiten des Substrats angeordnet sein.

Zur Anpassung der photosensitiven Anordnung an eine asymmetrische optische Auflösung könnte die Mikrolinsen-Anordnung asymmetrische Linsen aufweisen, wobei auch in diesem Fall - wie auch ganz allgemein - die Mikrolinsen-Anordnung aus einem Array, aus einer Zeile oder aus einer Einzellinse bestehen könnte.

Die Mikrolinsen-Anordnung könnte eine Kombination zweier gekreuzter Linsen - oder Zylinderlinsen-Arrays aus vorzugsweise asymmetrischen Linsen aufweisen.

Zur Realisierung einer besonders einfach handhabbaren Mikrolinsen-Anordnung könnten die Linsen- oder Zylinderlinsen-Arrays für die beiden Richtungen auf dem selben Substrat angeordnet sein. In weiter vorteilhafter Weise könnten die Linsen - oder Zylinderlinsen-Arrays für die beiden Richtungen auf unterschiedlichen Seiten, bspw. auf der Vorderseite und auf der Rückseite, des Substrats angeordnet sein.

Bei einer konstruktiv besonders vorteilhaften Ausgestaltung könnte die Mirkolinsen-Anordnung als Fenster zur vorzugsweise hermetischen Versiegelung, insbesondere Vakuumversiegelung, für tiefgekühlte CCDs oder APDs genutzt sein.

In weiter vorteilhafter Weise könnten chromatische Fehler durch individuelle Anpassung der einzelnen Mikrolinsen kompensiert sein.

Bei dem erfindungsgemäßen Detektor ist vorteilhaft, dass durch die Verwendung von Mikrolinsen ein Raum zwischen den lichtempfindlichen Pixeln der photosensitiven Anordnung geschaffen wird, der für zusätzliche Funktionen und/oder Bauteile genutzt werden kann. Bspw. könnte der durch die Mikrolinsen erzeugte Raum zwischen den lichtempfindlichen Pixeln der photosensitiven Anordnung für die Anordnung mindestens eines Schieberegisters genutzt werden. Des Weiteren könnte der Raum alternativ oder zusätzlich für die Anordnung mindestens einer Antibloomingsperre genutzt werden, die ein Übersprechen zwischen Pixeln bei zuviel Licht verhindert.

Weiterhin alternativ oder zusätzlich könnte der durch die Mikrolinsen erzeugte Raum zwischen den lichtempfindlichen Pixeln der photosensitiven Anordnung zur Addition unterschiedlicher Pixel innerhalb der Detektionsfläche genutzt werden. Eine weitere Nutzungsmöglichkeit des Raums betrifft die Absorption von Streulicht. Hierzu könnten in dem Raum geeignete Absorptionsmittel angeordnet werden.

Zur Erhöhung der Transmission könnte die Mikrolinsen-Anordnung oberflächenvergütet sein. Alternativ oder zusätzlich hierzu könnte die Mikrolinsen-Anordnung zur Erhöhung der Absorption oder Reduzierung von Streulicht vorzugsweise lokal eine Oberflächenbeschichtung aufweisen.

Zur Realisierung eines besonders einfach handhabbaren Detektors könnte die Mikrolinsen-Anordnung auf die photosensitive Anordnung aufgebracht, aufgedampft oder aufgeprägt sein. Hierdurch ist ein einzelnes Bauteil realisiert, das die Funktionalität der Mikrolinsen-Anordnung und der photosensitiven Anordnung kombiniert.

Bei einer bevorzugten Ausführungsform könnte die photosensitive Anordnung ein CCD- oder APD-Zeilenarray oder ein zweidimensionales CCD- oder APD-Array aufweisen. Hierbei ist auf den jeweiligen Anwendungsfall und auf den gewünschten Komfort bei der Verarbeitung von Daten abzustellen.

Bei einer besonders vorteilhaften Ausgestaltung könnte die photosensitive Anordnung parallelisierte CCDs oder APDs oder vorzugsweise front-illuminated EMCCDs aufweisen. Grundsätzlich könnten sowohl back-illuminated EMCCDs als auch front-illuminated EMCDDs verwendet werden. Der grundsätzliche Vorteil der back-illuminated EMCCDs ist die höhere Quanteneffizienz, da das Licht nicht durch die Gate-Strukturen des EMCCD-Chips gehen muss, bevor es auf die photoaktive Fläche trifft, womit üblicherweise Detektionsverluste verbunden sind. Der Nachteil der back-illuminated EMCCDs ist, dass sie sehr dünn sind und daher schwierig herzustellen und handzuhaben sind. Durch Einsatz der erfindungsgemäßen Mikrolinsen-Anordnung steht nun Raum auf der Vorderseite des EMCCD-Chips zur Verfügung, an dem keine photoaktive Fläche notwendig ist, da die Mikrolinsen-Anordnung das Licht nur auf ausgewählte Chip-Bereiche fokussiert. Dieser Raum kann für Gate-Strukturen genutzt werden, so dass man darauf verzichten kann, Gates über der photoaktiven Fläche anzuordnen. Damit ist es möglich, die einfacher herzustellenden und handzuhabenden front-illuminated EMCCDs bei gleichzeitig hoher Quanteneffizienz einzusetzen. Die Quanteneffizienz liegt hier im Bereich der üblichen back-illuminated EMCCDs.

Die obige Aufgabe wird ebenfalls durch ein Spektrometer mit einem Detektor nach einem der Ansprüche 1 bis 10 gelöst.

Weiterhin ist die voranstehende Aufgabe durch ein Mikroskop, insbesondere Konfokal- oder Semikonfokalmikroskop, mit einem Detektor nach einem der Ansprüche 1 bis 11 gelöst. Dabei könnte das Mikroskop ein einzelnes Detektionspinhole oder einen Multispot- oder Zeilenscanner aufweisen. Mit anderen Worten könnte der Detektor sowohl in Konfokalmikroskopen mit einem einzelnen Detektionspinhole als auch in Konfokalmikroskopen oder Semikonfokalmikroskopen mit Multispot- oder Zeilenscannern eingesetzt werden. Bei einem Multispotscanner könnte die Zahl der senkrecht zur spektralen Aufspaltung angeordneten Zylinderlinsen oder Mikrolinsen in der Regel der Anzahl der Spots entsprechen.

Bei einem Zeilenscanner könnte in der Regel auf die senkrecht zur Aufspaltung angeordneten Zylinderlinsen oder Mikrolinsen verzichtet werden. Die Anzahl der photosensitiven Pixel senkrecht zur spektralen Aufspaltung entspricht dann der Zahl der Pixel pro Scanzeile.

Mit dem erfindungsgemäßen Detektor ist quasi ein Mikrolinsen-CCD oder -APD und vorzugsweise Mikrolinsen-EMCCD bereitgestellt, das in Verbindung mit einem Spektrometer und einem Mikroskop, insbesondere Konfokalmikroskop, oder in Verbindung mit einem Zeilen- oder Multispotscanner einsetzbar ist.

Hinsichtlich der Diskussion der Vorteile besonderer Ausgestaltungen des erfindungsgemäßen Detektors im Zusammenhang mit dem beanspruchten Spektrometer oder dem beanspruchten Mikroskop wird zur Vermeidung von Wiederholungen auf die bereits erfolgte Beschreibung dieser Vorteile im vorherigen Text verwiesen. Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele der erfindungsgemäßen Lehre anhand der Zeichnung zu verweisen. In Verbindung mit der Erläuterung der bevorzugten Ausführungsbeispiele der erfindungsgemäßen Lehre anhand der Zeichnung werden auch im Allgemeinen bevorzugte Ausgestaltungen und Weiterbildungen der Lehre erläutert. In der Zeichnung zeigen
- Fig. 1: in einer schematischen Darstellung einen Detektor in einem Strahlengang mit spektraler Detektion,
- Fig. 2: in einer schematischen Darstellung einen weiteren Detektor in einem Strahlengang mit spektraler Detektion,
- Fig. 3: in einer schematischen Darstellung eine Mikrolinsen-Anordnung, wobei auf beiden Seiten eines Substrats Zylinderlinsen angeordnet sind,
- Fig. 4: in einer schematischen Darstellung ein erfindungsgemäßes Ausführungsbeispiel einer Mikrolinsen-Anordnung, wobei Zylinderlinsen auf beiden Seiten eines Substrats angeordnet sind und die Mikrolinsengröße entlang der Richtung der spektralen Aufspaltung zunimmt,
- Fig. 5: in einer schematischen Darstellung eine weitere Mikrolinsen-Anordnung, wobei Zylinderlinsen auf beiden Seiten eines Substrats angeordnet sind,
- Fig. 6: in einer schematischen Darstellung ein Beispiel für die Nutzung frei gewordener Zwischenräume zur elektronischen Ladungssummation auf einer CCD-Anordnung und
- Fig. 7: in einer schematischen Darstellung ein CCD- und ein APD-Array im Vergleich.

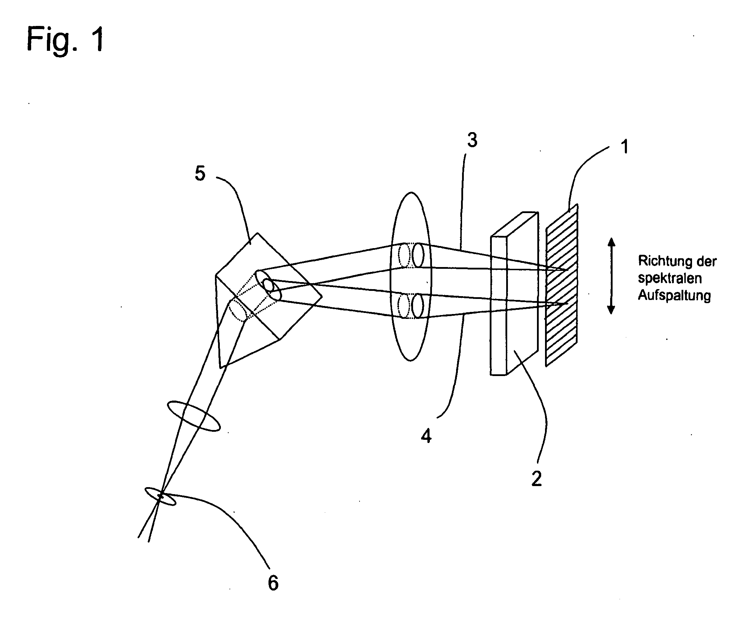

Figur 1 zeigt in einer schematischen Darstellung einen Detektor, insbesondere zur spektralen Detektion von Licht in einem Mikroskop. Der Detektor weist eine CCD-Anordnung 1 mit mindestens einem CCD auf, wobei in einem Strahlengang vor der CCD-Anordnung 1 ein Mittel zur Fokussierung eines spektral aufgespaltenen Lichts auf die CCD-Anordnung 1 angeordnet ist. Im Hinblick auf eine besonders hohe Detektionsgeschwindigkeit weist das Mittel eine Mikrolinsen-Anordnung 2 mit mindestens einer Mikrolinse auf. Bei diesen sowie bei den folgenden Detektoren könnte austelle einer CCO-Anordnung 1 and eine APD-Anordnung verwendet sein.

Bei dem in Figur 1 gezeigten Detektor werden zwei Lichtbündel 3 und 4, die mittels eines Prismas 5 spektral aufgespalten worden sind, auf die CCD-Anordnung 1 fokussiert. Im Strahlengang vor dem Prisma 5 ist eine Detektionslochblende 6 angeordnet.

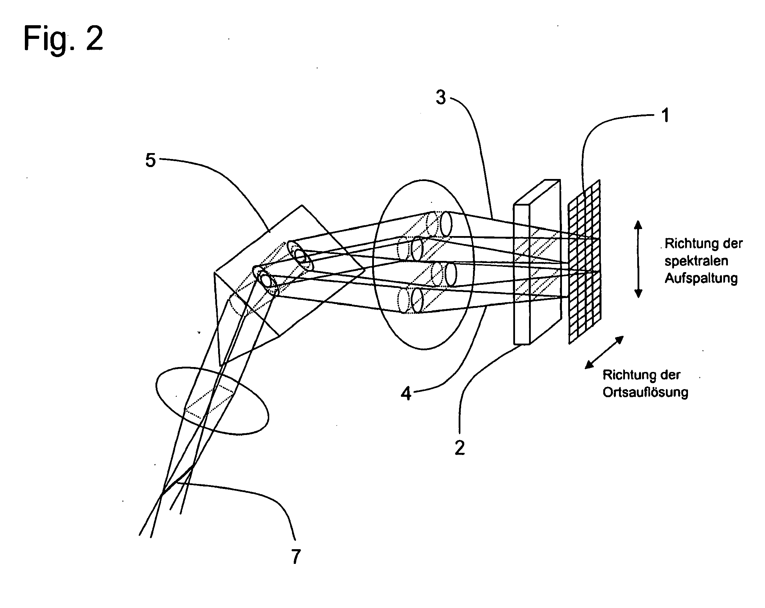

Figur 2 zeigt in einer schematischen Darstellung einen weiteren Detektor, wobei hier ein Zeilenscanner eingesetzt ist. Des Weiteren ist im Strahlengang vor dem die Lichtbündel 3 und 4 erzeugenden Prisma 5 eine Detektionsschlitzblende 7 angeordnet.

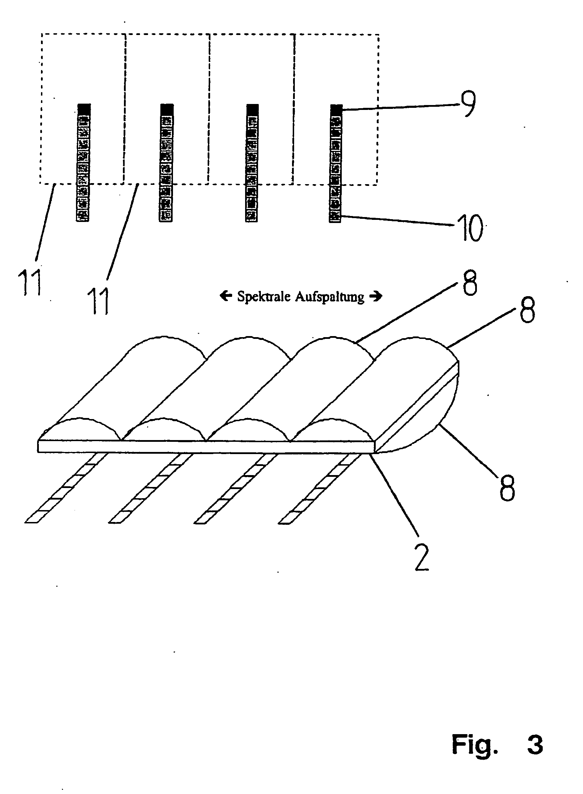

In den Figuren 3, 4 und 5 sind jeweils Mikrolinsen-Anordnungen 2 mit einzelnen Mikrolinsen 8 gezeigt. Die Mikrolinsen 8 sind auf dem selben Substrat auf Vorder - und Rückseite des Substrats angeordnet. Die in den Figuren 3 bis 5 gezeigten Mikrolinsen-Anordnungen 2 unterscheiden sich in der Anordnung der Mikrolinsen 8. Jeder Mikrolinse 8 ist ein CCD-Pixel 9 mit einem Schieberegister 10 zugeordnet. Dabei ist in gestrichelten Linien die jeweils zu einer Mikrolinse 8 gehörige Detektionsfläche 11 gezeigt.

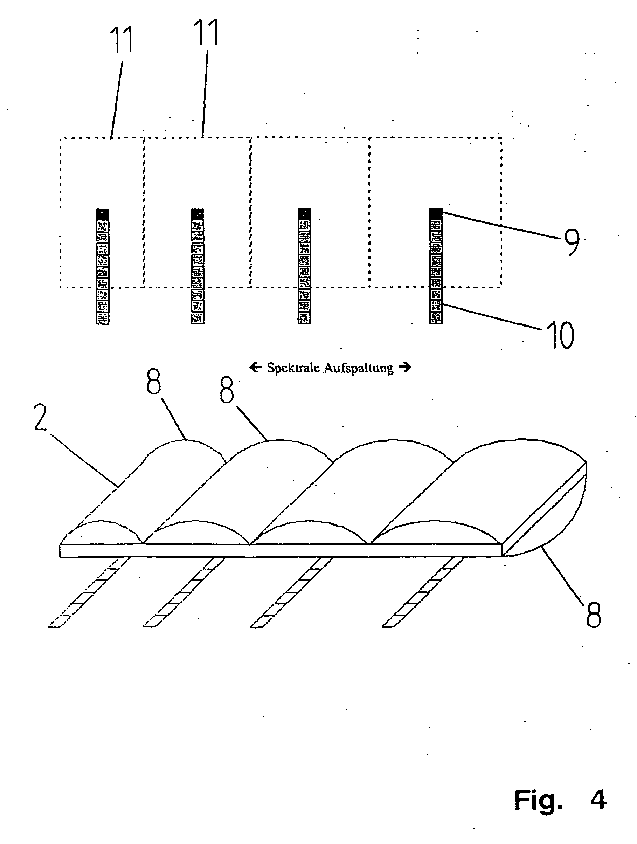

Bei der in Figur 3 gezeigten Mikrolinsen-Anordnung 2 sind gleich große Mikrolinsen 8 entlang der Richtung der spektralen Aufspaltung äquidistant angeordnet. Bei dem in Figur 4 gezeigten erfindungsgemäßen Ausführungsbeispiel nimmt die Größe der Mikrolinsen 8 entlang der Richtung der spektralen Aufspaltung zur optimalen Anpassung bei nichtlinearer Dispersion, bspw. bei einem Prisma 5, zu. Auch der Abstand der CCD-Pixel 9 nimmt entsprechend zu.

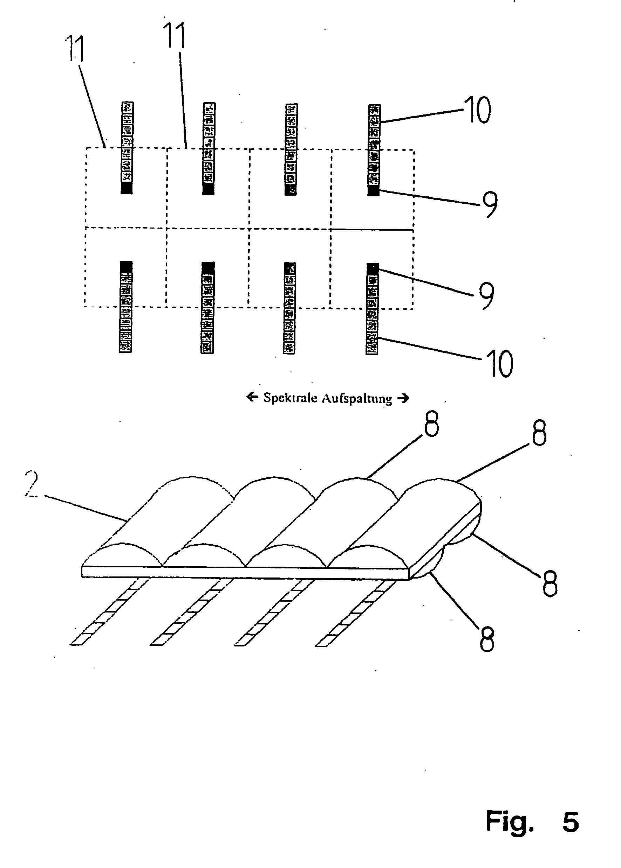

Bei der in Figur 5 gezeigten Mikrolinsen-Anordnung 2 sind mehrere CCD-Pixel 9 senkrecht zur Richtung der spektralen Aufspaltung angeordnet, was eine entsprechend angepasste Mikrolinsen-Anordnung 2 mit Mikrolinsen 8 auf der Oberseite und der Unterseite des Substrats zur Folge hat.

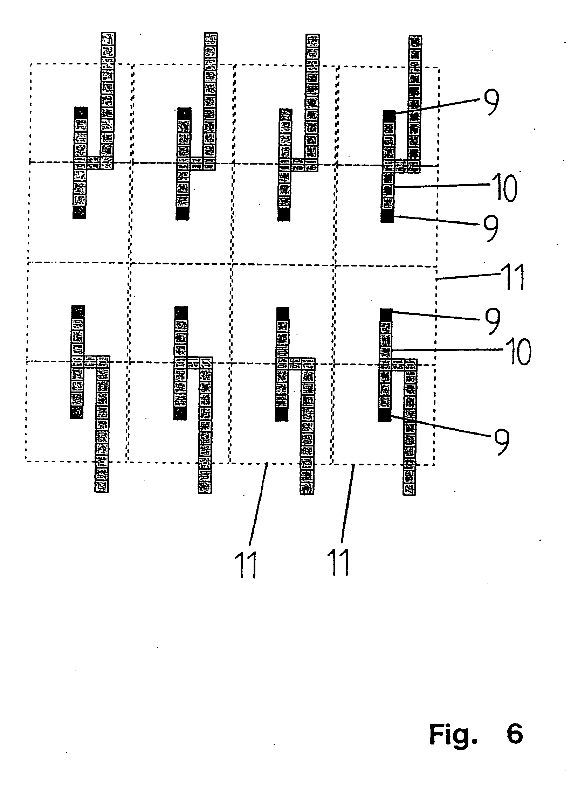

Figur 6 zeigt die Nutzung der mit dem erfindungsgemäßen Detektor frei gewordenen Zwischenräume zur elektronischen Ladungssummation. Hier sind jeweils zwei CCD-Pixeln 9 jeweils ein CCD-Schieberegister 10 zugeordnet. Die CCD-Pixel 9 sind jedoch jeweils einer Detektionsfläche 11 zugeordnet.

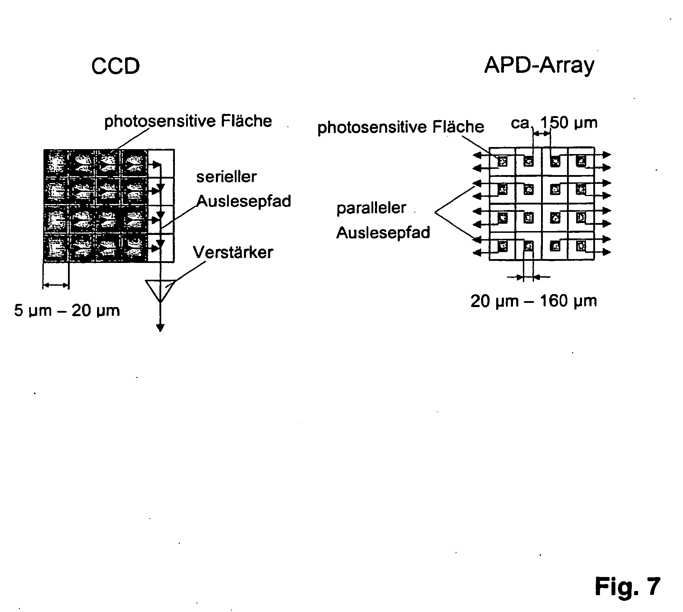

Fig. 7 zeigt ein CCD- und ein APD-Array im strukturellen Vergleich.

Hinsichtlich weiterer vorteilhafter Ausgestaltungen des erfindungsgemäßen Detektors wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

## Patentansprüche

1. Detektor, insbesondere zur spektralen Detektion von Licht in einem Mikroskop, mit einer photosensitiven Anordnung (1) in Form einerCCD- oder APD-Anordnung mit mehreren photosensitiven Flächen (9) und mit einem in einem Strahlengang vor der photosensitiven Anordnung (1) angeordneten Mittel zur Fokussierung eines spektral aufgespalteten Lichts auf die photosensitive Anordnung (1), wobei das Mittel eine Mikrolinsen-Anordnung (2) mit mehreren Mikrolinsen (8) aufweist, wobei jeder Mikrolinse (8) ein CCD-Pixel (9) mit einem Schieberegister (10) zugeordnet ist und wobei die Linsengröße der einzelnen Mikrolinsen (8) der Mikrolinsen-Anordnung (2) in Richtung der spektralen Detektion an das jeweils vorliegende spektrale Auflösungsvermögen eines zur spektralen Aufspaltung des Lichts dienenden dispersiven Elements bei der entsprechenden Wellenlänge angepasst ist,
**dadurch gekennzeichnet, dass** die Linsengröße der Mikrolinsen (8) entlang der Richtung der spektralen Aufspaltung zur Anpassung bei nichtlinearer Dispersion zunimmt und dass der Abstand der CCD-Pixel (9) entsprechend der Zunahme der Linsengröße der Mikrolinsen (8) entlang der Richtung der spektralen Aufspaltung zunimmt.

2. Detektor nach Anspruch 1, **dadurch gekennzeichnet, dass** die Mikrolinsen-Anordnung (2) zur Fokussierung in Richtung der spektralen Aufspaltung und vorzugsweise zusätzlich in hierzu senkrechter Richtung ausgebildet ist, wobei die Mikrolinsen-Anordnung (2) ein zweidimensionales Mikrolinsen-Array sein kann.

3. Detektor nach Anspruch 1 oder 2, **dadurch gekennzeichnet, dass** die Mikrolinse (8) oder die Mikrolinsen (8) eine sphärische Öffnung aufweist oder aufweisen und/oder dass die Mikrolinsen (8) eine Kombination aus einem Mikrozylinderlinsen-Array mit vorzugsweise Fokussierung in Richtung der spektralen Aufspaltung und mindestens einer Zylinderlinse mit Fokussierung in der dazu senkrechten Richtung aufweisen, wobei die mindestens eine Zylinderlinse eine einzelne Zylinderlinse, eine Mikrozylinderlinse, eine Stablinse oder ein Array aus derartigen Linsen sein kann.

4. Detektor nach Anspruch 2 oder 3, **dadurch gekennzeichnet, dass** die Mikrolinsen (8) für die Fokussierung in die beiden Richtungen unterschiedliche Brennweiten aufweisen.

5. Detektor nach einem der Ansprüche 1 bis 4, **dadurch gekennzeichnet, dass** die Mikrolinsen-Anordnung (2) asymmetrische Linsen aufweist und/oder dass die Mikrolinsen-Anordnung (2) eine Kombination zweier gekreuzter Linsen- oder Zylinderlinsen-Arrays aufweist.

6. Detektor nach einem der Ansprüche 2 bis 5, **dadurch gekennzeichnet, dass** die Linsen- oder Zylinderlinsen-Arrays oder Mikrolinsen (8) für die beiden Richtungen auf dem selben Substrat angeordnet sind, wobei die Linsen- oder Zylinderlinsen-Arrays oder Mikrolinsen (8) für die beiden Richtungen auf unterschiedlichen Seiten des Substrats angeordnet sind.

7. Detektor nach einem der Ansprüche 1 bis 6, **dadurch gekennzeichnet, dass** die Mikrolinsen-Anordnung (2) als Fenster zur vorzugsweise hermetischen Versiegelung, insbesondere Vakuumversiegelung, für tiefgekühlte CCDs (9) oder APDs genutzt ist.

8. Detektor nach einem der Ansprüche 1 bis 7, **dadurch gekennzeichnet, dass** chromatische Fehler durch individuelle Anpassung der einzelnen Mikrolinsen (8) kompensiert sind.

9. Detektor nach einem der Ansprüche 1 bis 8, **dadurch gekennzeichnet, dass** der durch die Mikrolinsen (8) erzeugte Raum zwischen den lichtempfindlichen Pixeln (9) der photosensitiven Anordnung (1) für die Anordnung mindestens eines Schieberegisters (10) und/oder für die Anordnung mindestens einer Antibloomingsperre und/oder zur Addition unterschiedlicher Pixel (9) innerhalb der Detektionsfläche (11) und/oder zur Absorption von Streulicht genutzt ist.

10. Detektor nach einem der Ansprüche 1 bis 9, **dadurch gekennzeichnet, dass** die Mikrolinsen-Anordnung (2) auf die photosensitive Anordnung (1) aufgebracht, aufgedampft oder aufgeprägt ist und/oder dass die photosensitive Anordnung (1) ein CCD- oder APD-Zeilenarray oder ein zweidimensionales CCD- oder APD-Array und/oder parallelisierte CCDs oder APDs und/oder vorzugsweise front-illuminated EMCCDs aufweist.

11. Spektrometer mit einem Detektor nach einem der Ansprüche 1 bis 10.

12. Mikroskop, insbesondere Konfokal- oder Semikonfokalmikroskop, mit einem Detektor nach einem der Ansprüche 1 bis 11, wobei das Mikroskop ein einzelnes Detektionspinhole (6) oder einen Multispot- oder Zeilenscanner aufweisen kann.

## Claims

1. Detector, in particular for spectral detection of light in a microscope, having a photosensitive arrangement (1) in the form of a CCD or APD arrangement having a plurality of photosensitive faces (9) and having a means which is arranged in a beam path upstream of the photosensitive arrangement (1) for focusing a spectrally split light onto the photosensitive arrangement (1), the means having a microlens arrangement (2) having a plurality of microlenses (8), a CCD pixel (9) having a shift register (10) being associated with each microlens (8) and the lens size of the individual microlenses (8) of the microlens arrangement (2) in the direction of the spectral detection being adapted to the respective spectral resolution capacity of a dispersive element which serves to spectrally split the light at the corresponding wavelength,
**characterised in that** the lens size of the microlenses (8) increases in the direction of the spectral splitting for adaptation in the event of non-linear dispersion, and **in that** the spacing of the CCD pixels (9) increases in accordance with the increase of the lens size of the microlenses (8) in the direction of the spectral splitting.

2. Detector according to claim 1, **characterised in that** the microlens arrangement (2) is constructed for focusing in the direction of the spectral splitting and preferably additionally in a direction perpendicular relative thereto, the microlens arrangement (2) being able to be a two-dimensional microlens array.

3. Detector according to claim 1 or claim 2, **characterised in that** the microlens(es) (8) has/have a spherical opening and/or **in that** the microlenses (8) have a combination comprising a microcylindrical lens array preferably with focusing in the direction of the spectral splitting and at least one cylindrical lens with focusing in the direction perpendicular relative thereto, the at least one cylindrical lens being able to be a single cylindrical lens, a microcylindrical lens, a rod lens or an array of such lenses.

4. Detector according to claim 2 or claim 3, **characterised in that** the microlenses (8) have different focal distances for focusing in both directions.

5. Detector according to any one of claims 1 to 4, **characterised in that** the microlens arrangement (2) has asymmetric lenses and/or **in that** the microlens arrangement (2) has a combination of two crossed lenses or cylindrical lens arrays.

6. Detector according to any one of claims 2 to 5, **characterised in that** the lens or cylindrical lens arrays or microlenses (8) for both directions are arranged on the same substrate, the lens arrays or the cylindrical lens arrays or microlenses (8) for the two directions being arranged at different sides of the substrate.

7. Detector according to any one of claims 1 to 6, **characterised in that** the microlens arrangement (2) is used as an aperture preferably for hermetic sealing, in particular vacuum sealing, for deep-frozen CCDs (9) or APDs.

8. Detector according to any one of claims 1 to 7, **characterised in that** chromatic errors are compensated for by means of individual adaptation of the individual microlenses (8).

9. Detector according to any one of claims 1 to 8, **characterised in that** the space produced by the microlenses (8) between the light-sensitive pixels (9) of the photosensitive arrangement (1) is used for the arrangement of at least one shift register (10) and/or for the arrangement of at least one anti-blooming gate and/or for the addition of various pixels (9) inside the detection face (11) and/or for absorption of scatter light.

10. Detector according to any one of claims 1 to 9, **characterised in that** the microlens arrangement (2) is fitted, vapour-deposited or stamped on the photosensitive arrangement (1) and/or **in that** the photosensitive arrangement (1) has a CCD or an APD line array or a two-dimensional CCD or APD array and/or parallel-arxanged CCDs or APDs and/or preferably front-illuminated EMCCDs.

11. Spectrometer having a detector according to any one of claims 1 to 10.

12. Microscope, in particular a confocal or semiconfocal microscope, having a detector according to any one of claims 1 to 11, the microscope being able to have an individual detection pin hole (6) or a multispot or line scanner.

## Revendications

1. Détecteur, en particulier pour la détection spectrale de la lumière dans un microscope, comportant un arrangement photosensible (1) sous forme d'un arrangement de CCD ou d'APD avec plusieurs surfaces photosensibles (9), et comportant un moyen disposé sur le trajet des rayons en avant de l'arrangement photosensible (1), pour focalisation d'une lumière ayant subi une dispersion spectrale sur l'arrangement photosensible, le moyen comportant un arrangement (2) de microlentilles, comportant plusieurs microlentilles (8), un pixel CCD (9), avec un registre à décalage (10), étant affecté à chaque microlentille (8), et la taille des microlentilles individuelles (8) de l'arrangement de microlentilles (2) étant, dans la direction de la détection spectrale, adaptée au pouvoir de résolution, spectrale correspondant d'un élément dispersif servant à la dispersion spectrale de la lumière, à la longueur d'onde correspondante, **caractérisé en ce que** la taille des microlentilles (8) augmente le long de la direction de la dispersion spectrale, pour adaptation à une dispersion non linéaire, et **en ce que** la distance des pixels CCD (9) augmente le long de la direction de la dispersion spectrale d'une manière correspondant à l'augmentation de la taille des microlentilles (8).

2. Détecteur selon la revendication 1, **caractérisé en ce que** l'arrangement de microlentilles (2) est configuré pour une focalisation dans la direction de la dispersion spectrale et de préférence en outre dans la direction qui lui est perpendiculaire, l'arrangement de microlentilles (2) pouvant être une matrice de microlentilles bidimensionnelle.

3. Détecteur selon la revendication 1 ou 2, **caractérisé en ce que** la microlentille (8) ou les microlentilles (8) présente (nt) une ouverture sphérique, et/ou **en ce que** les microlentilles (8) comportent une combinaison d'une matrice de microlentilles cylindriques, avec de préférence une focalisation dans la direction de la dispersion spectrale, et au moins une lentille cylindrique, avec focalisation dans la direction qui lui est perpendiculaire, la ou les lentilles cylindriques pouvant être une lentille cylindrique individuelle, une microlentille cylindrique, une lentille-barreau ou une matrice de lentilles de ce type.

4. Détecteur selon la revendication 2 ou 3, **caractérisé en ce que** les microlentilles (8) présentent, pour la focalisation, des distances focales différentes dans les deux directions.

5. Détecteur selon l'une des revendications 1 à 4, **caractérisé en ce que** l'arrangement de microlentilles (2) comprend des lentilles asymétriques, et/ou **en ce que** l'arrangement de microlentilles (2) comporte une combinaison de deux matrices croisées de lentilles ou de lentilles cylindriques.

6. Détecteur selon l'une des revendications 2 à 5, **caractérisé en ce que** les matrices de lentilles ou de lentilles cylindriques ou les microlentilles (8) sont disposées pour les deux directions sur le même substrat, les matrices de lentilles ou de lentilles cylindriques ou les microlentilles (8) étant disposées pour les deux directions sur des faces différentes du substrat.

7. Détecteur selon l'une des revendications 1 à 6, **caractérisé en ce que** l'arrangement de microlentilles (2) est utilisé en tant que fenêtre pour de préférence un scellement hermétique, en particulier un scellement sous vide, pour des CCD (9) ou des APD réfrigérés.

8. Détecteur selon l'une des revendications 1 à 7, **caractérisé en ce que** les défauts chromatiques sont compensés par une adaptation individuelle des différentes microlentilles (8).

9. Détecteur selon l'une des revendications 1 à 8, **caractérisé en ce que** l'espace produit par les microlentilles (8) entre les pixels photosensibles (9) de l'arrangement photosensible (1) est utilisé pour l'arrangement d'au moins un registre à décalage (10) et/ou pour l'arrangement d'au moins une barrière anti-éblouissement et/ou pour l'addition de pixels différents (9) à l'intérieur de la surface de détection (11) et/ou pour l'absorption de la lumière parasite.

10. Détecteur selon l'une des revendications 1 à 9, **caractérisé en ce que** l'arrangement de microlentilles (2) est appliqué, déposé par métallisation sous vide ou par gaufrage sur l'arrangement photosensible (1), et/ou **en ce que** l'arrangement photosensible (1) comporte une matrice de lignes CCD ou APD ou une matrice CCD ou APD bidimensionnelle et/ou des CCD ou des APD parallélisés, et/ou des EMCCD de préférence éclairés par l'avant.

11. Spectromètre comportant un détecteur selon l'une des revendications 1 à 10.

12. Microscope, en particulier microscope confocal ou semi-confocal, comportant un détecteur selon l'une des revendications 1 à 11, le microscope pouvant comporter un trou de détection individuel (6) ou un scanner multispot ou linéaire.
